# EUROPÄISCHE PATENTSCHRIFT

(11) **EP 4 466 528 B1**
(45) Veröffentlichungstag und Bekanntmachung des Hinweises auf die Patenterteilung: **28.10.2026**
(21) Anmeldenummer: 23700962.6
(22) Anmeldetag: 13.01.2023
(51) Int. Cl.: G01N 21/64, G02B 26/08

(54) **BELEUCHTUNGSVORRICHTUNG ZUM BELEUCHTEN EINER MIKROFLUIDISCHEN EINRICHTUNG UND VERFAHREN ZUM BELEUCHTEN EINER MIKROFLUIDISCHEN EINRICHTUNG**
ILLUMINATION APPARATUS FOR ILLUMINATING A MICROFLUIDIC DEVICE AND METHOD FOR ILLUMINATING A MICROFLUIDIC DEVICE
APPAREIL D'ÉCLAIRAGE POUR ÉCLAIRAGE D'UN DISPOSITIF MICROFLUIDIQUE ET PROCÉDÉ D'ÉCLAIRAGE D'UN DISPOSITIF MICROFLUIDIQUE

(30) Priorität: 18.01.2022 DE 102022200502
(43) Veröffentlichungstag der Anmeldung: 27.11.2024
(73) Patentinhaber: Robert Bosch GmbH, 70442 Stuttgart (DE)
(72) Erfinder: FIESS, Reinhold, 77770 Durbach (DE); RAMSTEINER, Ingo, 76275 Ettlingen (DE)
(86) Internationale Anmeldenummer: PCT/EP2023/050728
(87) Internationale Veröffentlichungsnummer: WO 2023/138993

(56) Entgegenhaltungen:
- EP-A1- 3 321 649
- US-A1- 2018 353 957

## Beschreibung

### Stand der Technik

Die Erfindung geht von einer Beleuchtungsvorrichtung, einem Analysegerät mit einer Beleuchtungsvorrichtung und einem Verfahren zum Beleuchten nach Gattung der unabhängigen Ansprüche aus.

Zum Analysieren von Probenmaterial können sogenannte Lab-on-Chip-Kartuschen mit einer Probe in Analysegeräte eingegeben und prozessiert werden. Dabei kann zum Beispiel ein molekulardiagnostisches Assay auf einer Kunststoffkartusche mit einem mikrofluidischen Netzwerk angeordnet sein. Das Analysegerät kann konstruiert sein, solche Kartuschen zu prozessieren, das heißt es kann mikrofluidische Vorgänge auf der Kartusche steuern und beispielsweise bestimmte Bereiche heizen oder beleuchten.

EP 3 321 649 A1 offenbart ein Mikrospektrometer für ein mobiles Gerät, beispielsweise ein Smartphone. Dazu wird ein Fluoreszenzelement eingesetzt, das unter Verwendung eines Anregungsstrahls einen Beleuchtungsstrahl zum Beleuchten einer mittels des Mikrospektrometers zu analysierenden Probe erzeugt.

US 2018/353957 A1 offenbart ein System zum Analysieren einer Probe einer mikrofluidischen Kartusche. Das System offenbart eine Quelle elektromagnetischer Strahlung und einen Scanspiegel zum Umlenken der Strahlung zu einer Probenplatte.

### Offenbarung der Erfindung

Vor diesem Hintergrund werden mit dem hier vorgestellten Ansatz eine Beleuchtungsvorrichtung, ein Analysegerät mit einer Beleuchtungsvorrichtung und ein Verfahren zum Beleuchten gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Mit der hier vorgestellten Beleuchtungsvorrichtung ist vorteilhafterweise die Beleuchtung von einer oder mehrerer zusammenhängender Flächen, beispielsweise auf einer Lab-on-Chip-Kartusche, mit Licht möglich. Anzahl, Form und Ausdehnung der Flächen können dabei innerhalb eines gewissen Bereichs frei wählbar und flexibel elektronisch steuerbar sein. Das Licht selbst kann vorteilhafterweise die Anforderungen für eine Fluoreszenz-Anregung molekulardiagnostischer Assays erfüllen, auch mit mehreren Farbkanälen. Dies bedeutet ein in Zentralwellenlänge und Breite genau definiertes Spektrum, beziehungsweise mehrere solcher Spektren, zwischen denen man umschalten kann.

Erfindungsgemäß wird eine Beleuchtungsvorrichtung nach Anspruch 1 zum Beleuchten einer in einem Aufnahmebereich eines Analysegeräts angeordneten mikrofluidischen Einrichtung vorgestellt. Dabei umfasst die Beleuchtungsvorrichtung mindestens eine fluoreszierende Lichtquelle, die ausgebildet ist, um angeregt durch eine Anregungsstrahlung durch Fluoreszieren einen Fluoreszenzlichtstrahl auszugeben, und eine Fokussiereinrichtung zum Fokussieren des Fluoreszenzlichtstrahls, wobei die Fokussiereinrichtung ausgebildet ist, um den Fluoreszenzlichtstrahl in einen Fokussierlichtstrahl zu überführen. Zudem umfasst die Beleuchtungsvorrichtung eine Spiegeleinrichtung zum Lenken des Fokussierlichtstrahls zu der mikrofluidischen Einrichtung, wobei die Spiegeleinrichtung mindestens ein bewegliches, insbesondere mechanisch bewegliches, Spiegelelement umfasst.

Beispielsweise kann es sich bei dem Analysegerät um ein Gerät zum Durchführen von diagnostischen Tests, wie beispielsweise PCR-Schnelltests, handeln. Dabei kann eine Probe, bei der es sich beispielsweise um eine Flüssigkeit mit Probenmaterial oder eine feste Probe handeln kann, zum Beispiel in eine geeignete mikrofluidische Einrichtung eingegeben werden, bei der es sich beispielsweise um eine Lab-on-Chip-Kartusche mit einem mikrofluidischen Netzwerk zum Prozessieren der Probe handeln kann. Die mikrofluidische Einrichtung mit der Probe kann beispielsweise manuell in den Aufnahmebereich des Analysegeräts eingegeben werden, um innerhalb des Analysegeräts prozessiert zu werden. Dabei kann das Analysegerät die hier beschriebene Beleuchtungsvorrichtung, die auch als Anregungsoptik bezeichnet werden kann, umfassen, um die Probe durch ein Beleuchten derselben anzuregen. Dabei ist mit der hier vorgestellten Beleuchtungsvorrichtung vorteilhafterweise die Beleuchtung von einer oder mehreren Flächen auf einer Lab-on-Chip-Kartusche möglich. Unter einer Lichtquelle kann auch ein Kanal verstanden werden. Anzahl, Form und Ausdehnung der zu beleuchtenden Flächen können zusätzlich oder alternativ flexibel elektronisch steuerbar sein. Das zum Beleuchten verwendete Licht kann hierbei die Anforderungen für eine Fluoreszenz-Anregung molekulardiagnostischer Assays erfüllen. Viele molekulardiagnostische Verfahren, wie zum Beispiel Polymerase-Kettenreaktionen (PCR), stützten sich aus messtechnischer Sicht auf Fluoreszenzmessungen. Dabei kann die indirekte Erzeugung von Licht mittels fluoreszierender oder phosphoreszierender Leuchtstoffe notwendig sein. Dies kann mit der hier vorgestellten Beleuchtungsvorrichtung vorteilhafterweise ermöglicht werden, indem beispielsweise anstelle von einer oder mehrerer Laserdioden eine fluoreszierende Lichtquelle eingesetzt wird. Die fluoreszierende Lichtquelle kann auch phosphorbasierte Lichtquelle genannt werden. Der in diesem Zusammenhang etablierte Begriff "Phosphor" bezeichnet nicht das gleichnamige Element, sondern allgemein einen geeigneten Leuchtstoff, der beispielsweise durch eine primäre Lichtquelle, zum Beispiel eine Laserdiode, zur Emission von Fluoreszenzlicht angeregt werden kann. Mit solchen Quellen sind vorteilhafterweise extrem kleine Lichtquellen realisierbar, so dass sich das so erzeugte Fluoreszenzlicht dann auch wiederum gut kollimieren oder fokussieren lässt, beispielsweise im Sinne der Erfindung auf beziehungsweise über einen (Mikro-) Spiegel. Für die erwähnte Fokussierung auf die Spiegeleinrichtung kann die Fokussiereinrichtung der Beleuchtungsvorrichtung zum Beispiel Linsen, Hohlspiegel oder ähnlichen optischen Elementen umfassen. Die Beleuchtungsverteilung selbst kann mittels eines insbesondere mechanisch steuerbaren Spiegelelements, beispielsweise eines mikromechanischen Spiegels, kontrolliert werden. Die Beleuchtung kann zum Beispiel nach dem sogenannten Flying-Spot-Prinzip stattfinden, wobei der Strahl mittels des Spiegels über die betreffenden Flächen gescannt oder geführt wird.

Erfindungsgemäß umfasst die Fokussiereinrichtung mindestens ein holografisch optisches Element. Beispielsweise kann der Fluoreszenzlichtstrahl über ein holografisch optisches Element (HOE) zum Spiegelelement gelenkt werden. Dies bietet den Vorteil, über das HOE auch gleich eine Wellenlängenselektion vornehmen zu können, was alternativ an anderer Stelle, zum Beispiel durch dielektrische Interferenzfilter im Strahlengang, erfolgen könnte. Zudem bietet diese Ausführungsform den besonderen Vorteil, dass sie sehr effizient mit dem zur Verfügung stehenden Licht umgehen kann. Andere Projektorverfahren, beispielsweise auf Basis von LCD, DLP, SLM, LCOS, basieren auf mikromechanischen oder flüssigkristallbasierten Modulatoren, die die Intensitätsverteilung über Subtraktion erzeugen, d.h. zur Verfügung stehendes Licht wird verworfen, um bestimmte Bereiche abzudunkeln. Mit Hologrammen können hingegen vorteilhafterweise intrinsisch wellenlängenselektive strahlführende Elemente realisiert werden. Ein solches HOE kann beispielsweise ein Multiplex-Hologramm oder mehrere übereinandergeschichteten Einzelhologrammen aufweisen. Die einzelnen Hologramme können so eingerichtet sein, dass sie zum Beispiel von der fluoreszierenden Lichtquelle eine Kugelwelle mit der gewünschten Wellenlänge fokussiert auf den Spiegel umlenken können. Je nachdem, welcher Phosphor, beziehungsweise welcher fluoreszierende Leuchtstoff, gerade angeregt wird und emittiert, kann dann das Spiegelelement mit den gewünschten Wellenlängen angestrahlt werden.

Gemäß einer weiteren Ausführungsform kann die Spiegeleinrichtung mindestens einen mikromechanischen Spiegel aufweisen. Als bewegliches Spiegelelement ist beispielsweise ein mikromechanischer Spiegel zu bevorzugen. Beispielsweise kann die Beleuchtung nach dem sogenannten Flying-Spot-Prinzip stattfinden, wobei der Strahl mittels des Spiegels über die betreffenden Flächen gescannt oder geführt wird. Je nach den anwendungsseitigen Anforderungen kann ein progressives Scanverfahren zum Einsatz kommen, also Zeile für Zeile, oder ein Lissajous-Scanner. Letzteres hat den Vorteil, dass hier größere Ablenkwinkel mit gleichzeitig größerer Spiegelfläche möglich sind. Vorteilhafterweise lässt sich eine solche Spiegeleinrichtung demnach auf die Anforderungen optimieren und kann zudem kostengünstig umgesetzt werden.

Gemäß einer weiteren Ausführungsform kann die fluoreszierende Lichtquelle ausgebildet sein, um den Fluoreszenzlichtstrahl schmalbandig auszugeben. Unter schmalbandig ist dabei vorzugsweise eine spektrale Halbwertsbreite von weniger als 100 Nanometer (nm), bevorzugt weniger als 50 nm, besonders bevorzugt weniger als 30 nm, beispielsweise 40 oder 20 nm zu verstehen. Beispielsweise können als Leuchtmittel besonders schmalbandige Phosphore eingesetzt werden, wie beispielsweise SrGa2S4:Eu2+ (Emission bei 540nm, FWHM ca. 45nm) oder Ba0.8Sr0.2Mg3SiN4:Eu (Emission bei 635nm, FWHM ca. 45nm). Dies ist besonders vorteilhaft, wenn der jeweilige Phosphor nur für einen Anregungskanal genutzt und für andere Kanäle gewechselt wird. Abgesehen von den aus dem Stand der Technik bekannten Phosphormaterialien können auch Halbleiter-Quantenpunkte eingesetzt werden.

Gemäß einer weiteren Ausführungsform kann die fluoreszierende Lichtquelle ausgebildet sein, um den Fluoreszenzlichtstrahl mit zumindest einem breiten Wellenlängenband auszugeben. Breitbandigere Phosphore wie zum Beispiel Y3Al3O12:Ce (mit einer Halbwertsbreite von 120nm) oder Mischungen mit mehreren schmalbandigen Emittern, beispielsweise 2 bis 4 oder mehr Leuchtstoffe mit jeweils 40-80 nm Halbwertsbreite, können besonders vorteilhaft sein, wenn der Phosphor für mehrere Anregungskanäle genutzt wird und die Umschaltung über eine wellenlängenselektierende Optik (Filter) erfolgt.

Gemäß einer weiteren Ausführungsform kann mindestens ein optischer Bandpassfilter im Strahlengang des Fluoreszenzlichtstrahls angeordnet sein. Die Fokussieroptik hat die Aufgabe, das in einen großen Raumwinkel abgestrahlte Fluoreszenzlicht des Phosphors zu sammeln und auf den Spiegel zu bündeln. Hierbei können zum Beispiel konventionelle Bauelemente wie beispielsweise refraktive oder diffraktive Linsen oder Hohlspiegel eingesetzt werden. Wird eine solche Lösung gewählt, so kann je nach Bandbreite des Fluoreszenzlichts als Teil dieser Optik eine wellenlängenselektive Vorrichtung, vorzugsweise ein Bandpassfilter benötigt werden. Dies hat den Vorteil, dass unerwünschte spektrale Anteile des Lichts mittels des Bandpassfilters entfernt werden können.

Zudem kann der Bandpassfilter durch einen eine weitere Bandpasscharakteristik aufweisenden Bandpassfilter austauschbar angeordnet sein. Beispielsweise kann das Emissionsspektrum des Phosphors ein breites Band mit bevorzugter Halbswertsbreite größer 100 nm, besonders bevorzugt größer 150 nm, beziehungsweise mehrere schmalere Bänder aufweisen , wobei alle gewünschten Anregungswellenlängen darin enthalten sind. In diesem Fall kann der Bandpassfilter einer von mehreren sein, die zum Beispiel mittels einer mechanischen Wechseleinheit, wie beispielsweise ein Filterrad oder ein Schieber, ausgetauscht werden können. Gemäß besonderer Ausgestaltung umfasst die Beleuchtungsvorrichtung somit mindestens zwei austauschbare Bandpassfilter. Je nach gewünschtem Anregungskanal kann dann vorteilhafterweise der betreffende Filter in den Strahlengang gebracht und so das jeweils geforderte spektrale Band über den Spiegel geleitet werden.

Gemäß einer weiteren Ausführungsform kann die fluoreszierende Lichtquelle durch eine eine andere Fluoreszenzcharakteristik aufweisende Lichtquelle austauschbar angeordnet sein. Beispielsweise kann die fluoreszierende Lichtquelle durch eine andere fluoreszierende Lichtquelle ersetzt werden, sowie gegebenenfalls durch weitere Lichtquellen mit sich beispielsweise von der ersten Emissionscharakteristik unterscheidenden Emissionscharakteristiken. Gemäß besonderer Ausgestaltung umfasst die Beleuchtungsvorrichtung somit mindestens zwei austauschbare Lichtquellen. Die Lichtquellen können zum Beispiel nebeneinander auf einem Wechselelement oder Träger angeordnet sein. Die Beleuchtungsvorrichtung kann beispielsweise ausgebildet sein, um den Träger mit den Leuchtmitteln so zu bewegen, dass das gewünschte Leuchtmittel in den Fokus des Anregungslichts gerät. Vorteilhafterweise kann dadurch eine spezifische fluoreszierende Lichtquelle nur für einen Anregungskanal genutzt und für andere Kanäle gewechselt werden.

Gemäß einer weiteren Ausführungsform kann die Beleuchtungsvorrichtung eine weitere fluoreszierende Lichtquelle aufweisen, die ausgebildet sein kann, um angeregt durch die Anregungsstrahlung oder eine weitere Anregungsstrahlung durch Fluoreszieren einen weiteren Fluoreszenzlichtstrahl auszugeben. Beispielsweise kann die Beleuchtungsvorrichtung mehrere fluoreszierende Lichtquellen aufweisen, die zum Beispiel insbesondere mechanisch gewechselt und zusätzlich oder alternativ mittels einer Steuereinrichtung angesteuert werden können. Dabei können beispielsweise einige dieser Lichtquellen phosphorbasiert sein und andere können zum Beispiel als Laserdioden ausgebildet sein. Dabei können separate Lichtquellen zum Beispiel über ein Spiegelelement kombiniert werden. Sofern die einzelnen Phosphorbänder schmal genug sind, in keinem der ihnen nicht zugeordneten Kanäle Licht zu emittieren, kann in dieser Ausführungsform vorteilhafterweise eine feste Fokussieroptik, beispielsweise mit einem festen Multibandpassfilter eingesetzt werden.

Beispielsweise kann die Beleuchtungsvorrichtung mindestens drei weitere fluoreszierende Lichtquellen aufweisen, die ausgebildet sein können, um angeregt durch die Anregungsstrahlung oder mindestens eine weitere Anregungsstrahlung durch Fluoreszieren weitere Fluoreszenzlichtstrahlen auszugeben. Somit kann die Beleuchtungsvorrichtung beispielsweise insgesamt vier, fünf oder mehr Lichtquellen aufweisen.

Gemäß einer weiteren Ausführungsform kann die Beleuchtungsvorrichtung eine primäre Lichtquelle aufweisen, die ausgebildet sein kann, um die Anregungsstrahlung zum Anregen der fluoreszierenden Lichtquelle auszugeben. Die Beleuchtungsvorrichtung kann zum Beispiel mindestens eine primäre Lichtquelle und ein Phosphormaterial aufweisen. Als primäre Lichtquelle eignen sich beispielsweise Laserdioden oder Laserdiodenarrays. Dabei können sowohl Anordnungen mit mehreren fluoreszierenden Lichtquellen möglich sein, bei denen jede fluoreszierende Lichtquelle ihre eigene Primärquelle aufweist, als auch beispielsweise eine primäre Lichtquelle, die Anregungslicht für eine Mehrzahl von fluoreszierenden Lichtquellen bereitstellen kann. Vorteilhafterweise ist der Beleuchtungsvorgang durch den Einsatz einer je nach Anforderungen wählbaren primären Lichtquelle optimierbar.

Gemäß einer weiteren Ausführungsform kann die Beleuchtungsvorrichtung eine Steuereinrichtung umfassen, die ausgebildet sein kann, um ein Lenksignal zum Lenken des Fokussierstrahls an die Spiegeleinrichtung bereitzustellen und zusätzlich oder alternativ um ein Aktionssignal zum Ein- und Ausschalten der Lichtquelle bereitzustellen.

Hierzu kann die Steuereinrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Steuereinrichtung kann vorliegend ein elektrisches Gerät verstanden werden, das Sensorsignale verarbeitet und in Abhängigkeit davon Steuer- und/oder Datensignale ausgibt. Die Steuereinrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Steuereinrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Zudem wird ein Analysegerät zum Analysieren einer Probe in einer mikrofluidischen Einrichtung vorgestellt, wobei das Analysegerät einen Aufnahmebereich zum Aufnehmen der mikrofluidischen Einrichtung und eine Variante der zuvor vorgestellten Beleuchtungsvorrichtung umfasst. Beispielsweise kann das Analysegerät zur Integration eines molekulardiagnostischen Assays auf einer Kunststoffkartusche mit einem mikrofluidischen Netzwerk ausgebildet sein. Das eigentliche Gerät kann konstruiert sein, solche Kartuschen zu prozessieren, d.h. es kann zum Beispiel mikrofluidische Vorgänge auf der Kartusche steuern und bestimmte Bereiche heizen und zusätzlich oder alternativ beleuchten. Dabei kann das Analysegerät zum Beispiel eine Kamera mit wechselbaren Bandpassfiltern aufweisen, die einen bestimmten Bereich der Kartusche betrachten kann. Diese Bereiche können vorteilhafterweise mit der Beleuchtungsvorrichtung zum Beispiel mit Licht eines definierten Wellenlängenbereichs beleuchtet werden, um dort Fluoreszenz anzuregen, die diagnostisch ausgewertet werden kann.

Zudem wird ein Verfahren gemäß Anspruch 13 zum Beleuchten einer in einem Aufnahmebereich eines Analysegeräts angeordneten mikrofluidischen Einrichtung vorgestellt, wobei das Verfahren einen Schritt des Ausgebens eines Fluoreszenzlichtstrahls ansprechend auf eine Anregungsstrahlung aufweist und einen Schritt des Überführens des Fluoreszenzlichtstrahls in einen fokussierten Fokussierlichtstrahl. Zudem umfasst das Verfahren einen Schritt des Lenkens des Fokussierlichtstrahls auf die mikrofluidische Einrichtung.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Ausführungsbeispiels eines Analysegeräts;
Fig. 2 eine schematische Darstellung einer Beleuchtungsvorrichtung gemäß einem Ausführungsbeispiel;
Fig. 3 eine schematische Darstellung einer Beleuchtungsvorrichtung gemäß einem Ausführungsbeispiel;
Fig. 4a eine schematische Darstellung einer Beleuchtungsvorrichtung gemäß einem Ausführungsbeispiel;
Fig. 4b eine schematische Darstellung einer Beleuchtungsvorrichtung gemäß einem Ausführungsbeispiel; und
Fig. 5 ein Ablaufdiagramm eines Verfahrens zum Beleuchten einer in einem Aufnahmebereich eines Analysegeräts angeordneten mikrofluidischen Einrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

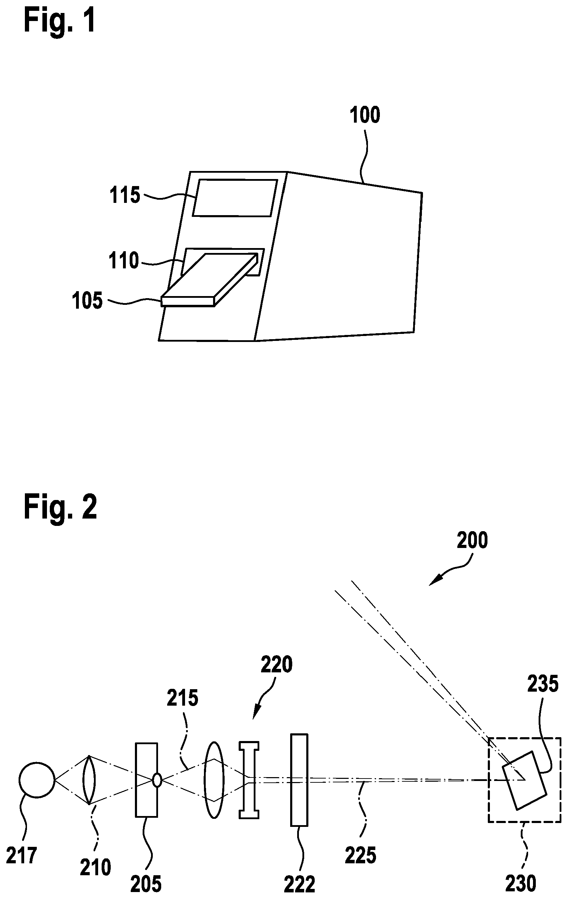

Fig. 1 zeigt eine schematische Darstellung eines Ausführungsbeispiels eines Analysegeräts 100. Das Analysegerät 100 ist in diesem Ausführungsbeispiel ausgebildet, um eingegebene Proben zu analysieren, wodurch zum Beispiel PCR-Tests durchführbar sind. Hierfür ist eine mikrofluidische Einrichtung 105, bei der es sich lediglich beispielhaft um eine Kartusche mit einem Kunststoffgehäuse und einem mikrofluidischen Netzwerk zum Prozessieren der Probe handelt, in einen Aufnahmebereich 110 eingebbar. In diesem Ausführungsbeispiel umfasst das Analysegerät weiterhin ein Display 115 mit einer Touchfunktion, mittels dem lediglich beispielhaft Einstellungen zum gewünschten Analyseprozesses manuell eingebbar sind. Zudem ist das Display 115 lediglich beispielhaft ausgebildet, um Analyseergebnisse anzuzeigen.

Mit anderen Worten sieht das Konzept des Analysegeräts die Integration eines molekulardiagnostischen Assays auf einer Kunststoffkartusche mit einem mikrofluidischen Netzwerk vor. Das eigentliche Gerät ist konstruiert, solche Kartuschen zu prozessieren, das heißt, es kann mikrofluidische Vorgänge auf der Kartusche steuern und bestimmte Bereiche heizen und zusätzlich oder alternativ beleuchten. Insbesondere umfasst es in diesem Ausführungsbeispiel eine Beleuchtungsvorrichtung, wie sie in den folgenden Figuren 2 bis 4 näher beschrieben wird, die Fluoreszenzsignale anregen und auswerten kann. Beispielhaft besteht diese Einheit aus zwei Teilen. Erstens aus einer Kamera mit wechselbaren Bandpassfiltern, die einen bestimmten Bereich der Kartusche betrachtet. Zweitens aus einer Vorrichtung, die ausgebildet ist, um bestimmte Bereiche der Kartusche mit Licht eines definierten Wellenlängenbereichs zu beleuchten, um dort Fluoreszenz anzuregen. Diese Bereiche sind im Sichtbereich der Kamera angeordnet.

Fig. 2 zeigt eine schematische Darstellung einer Beleuchtungsvorrichtung 200 gemäß einem Ausführungsbeispiel. Die Beleuchtungsvorrichtung 200 ist ausgebildet, um eine mikrofluidischen Einrichtung in einem Aufnahmebereich eines Analysegeräts, wie es in der vorangegangenen Figur beschrieben wurde, zu beleuchten. Hierfür umfasst die Beleuchtungsvorrichtung 200 in diesem Ausführungsbeispiel eine fluoreszierende Lichtquelle 205, die auch als phosphorbasierte Lichtquelle oder als Lichtquelle mit einem Phosphor bezeichnet werden kann und die ausgebildet ist, um angeregt durch eine Anregungsstrahlung 210 durch Fluoreszieren einen Fluoreszenzlichtstrahl 215 auszugeben. Dabei ist die Anregungsstrahlung 210 die in diesem Ausführungsbeispiel von einer primären Lichtquelle 217 ausgebbar. Lediglich beispielhaft weist die fluoreszierende Lichtquelle 205 einen besonders schmalbandigen Phosphor, beispielhaft SrGa2S4:Eu2+, auf, und ist in diesem Ausführungsbeispiel ausgebildet, um den Fluoreszenzlichtstrahl 215 schmalbandig mit einer beispielhaften Emission bei 540nm und FWHM ca. 45nm auszugeben. Entsprechend ist in diesem Ausführungsbeispiel die Lichtquelle nur für einen Anregungskanal nutzbar und für andere Kanäle durch eine andere Lichtquelle austauschbar angeordnet, wobei sich die beiden Lichtquellen in ihrer Fluoreszenzcharakteristik unterscheiden. In einem anderen Ausführungsbeispiel kann beispielsweise auch Ba0.8Sr0.2Mg3SiN4:Eu (Emission bei 635nm, FWHM ca.45nm) einsetzt werden. Beispielsweise ist die Beleuchtungsvorrichtung 200 im montierten Zustand so in dem Analysegerät angeordnet, dass die jeweilige Lichtquelle von einem Benutzer ohne Werkzeug einfach ausgetauscht werden kann.

Die Beleuchtungsvorrichtung 200 umfasst weiterhin eine Fokussiereinrichtung 220 zum Fokussieren des Fluoreszenzlichtstrahls 215, wobei die Fokussiereinrichtung 220, die auch als Fokussieroptik bezeichnet werden kann, lediglich beispielhaft eine Mehrzahl von Linsen sowie in diesem Ausführungsbeispiel einen Bandpassfilter 222 aufweist. In dem hier dargestellten Ausführungsbeispiel ist ein Bandpassfilter erforderlich, um unerwünschte spektrale Anteile des Fluoreszenzlichtstrahls 215 zu entfernen. Da in diesem Ausführungsbeispiel die fluoreszierende Lichtquelle 205 eine von mehreren ist, die mechanisch wechselbar sind, und in diesem Ausführungsbeispiel Licht in einem schmalen Phosphorband in einem zugeordneten Kanal emittiert, ist in diesem Ausführungsbeispiel ein fester Multibandpassfilter 222 einsetzbar.

Mittels der Fokussiereinrichtung 220 ist der Fluoreszenzlichtstrahl 215 in einen Fokussierlichtstrahl 225 überführbar. Dieser Fokussierlichtstrahl 225 ist weiterhin mit einer Spiegeleinrichtung 230 lenkbar, wobei die Spiegeleinrichtung 230 in diesem Ausführungsbeispiel ein mechanisch bewegliches Spiegelelement 235 umfasst. Lediglich beispielhaft ist das Spiegelelement 235 in diesem Ausführungsbeispiel als mikromechanischer Spiegel ausgebildet. Mittels der Spiegeleinrichtung 230 ist der Fluoreszenzlichtstrahl beispielhaft auf eine mikrofluidische Einrichtung, wie sie in der vorangegangenen Figur beschrieben wurde, lenkbar, um eine in der Einrichtung angeordnete Probe zu beleuchten.

Mit anderen Worten ist die hier dargestellte Beleuchtungsvorrichtung 200 in eine phosphorbasierte Lichtquelle, eine Fokussieroptik und einen mechanisch beweglichen Spiegel gegliedert. Die phosphorbasierte Lichtquelle umfasst beispielhaft eine primäre Lichtquelle 217 und ein durch die von der primären Lichtquelle 217 ausgebbare Anregungsstrahlung 210 anregbares Phosphormaterial. Als primäre Lichtquelle eignen sich beispielhaft Laserdioden oder Laserdiodenarrays. Die Fokussieroptik hat die Aufgabe, das in einen großen Raumwinkel abgestrahlte Fluoreszenzlicht des Phosphors zu sammeln und auf den Spiegel zu bündeln. Nach Stand der Technik sind hier eine Reihe konventioneller Bauelemente wie beispielhaft refraktive oder diffraktive Linsen oder Hohlspiegel einsetzbar. Durch die Wahl einer solchen Lösung ist als Teil dieser Optik eine wellenlängenselektive Vorrichtung nötig, die in dem hier gezeigten Ausführungsbeispiel einen Bandpassfilter umfasst, um unerwünschte spektrale Anteile des Lichts zu entfernen. Als beweglicher Spiegel ist ein mikromechanischer Spiegel zu bevorzugen. Dadurch ist zur Anregung einer Probe ein Flying-Spot-Projektor verwendbar, also ein mit einem beweglichen Spiegel steuerbarer Lichtstrahl. Solche Projektoren erfordern insbesondere bei kleinen, schnellen Spiegeln gut fokussierbare Lichtquellen mit kleiner Etendue. In anderen Ausführungsbeispielen kann auch eine Kombination aus zwei einachsigen Spiegeln eingesetzt werden. Je nach den anwendungsseitigen Anforderungen ist unter Verwendung der Beleuchtungsvorrichtung 200 ein progressives Scanverfahren durchführbar, also Zeile für Zeile, oder ein Lissajous-Scanner einsetzbar.

In einem Ausführungsbeispiel kann die Fokussiereinrichtungen zum Fokussieren des Fluoreszenzlichtstrahls beispielsweise einen Bandpassfilter umfassen, der durch einen eine weitere Bandpasscharakteristik aufweisenden Bandpassfilter austauschbar angeordnet ist. Anders ausgedrückt können die Emissionsspektren der phosphorbasierten Lichtquelle ein breites Band aufweisen, beziehungsweise mehrere schmalere Bänder, wobei alle gewünschten Anregungswellenlängen darin enthalten sind. Dabei kann der Bandpassfilter einer von mehreren sein, die beispielsweise mittels einer insbesondere mechanischen Wechseleinheit, wie ein Filterrad oder ein Schieber, austauschbar sein können. Je nach gewünschtem Anregungskanal kann der betreffende Filter in den Strahlengang eingebracht werden und so das jeweils geforderte spektrale Band über die Spiegeleinrichtung leiten.

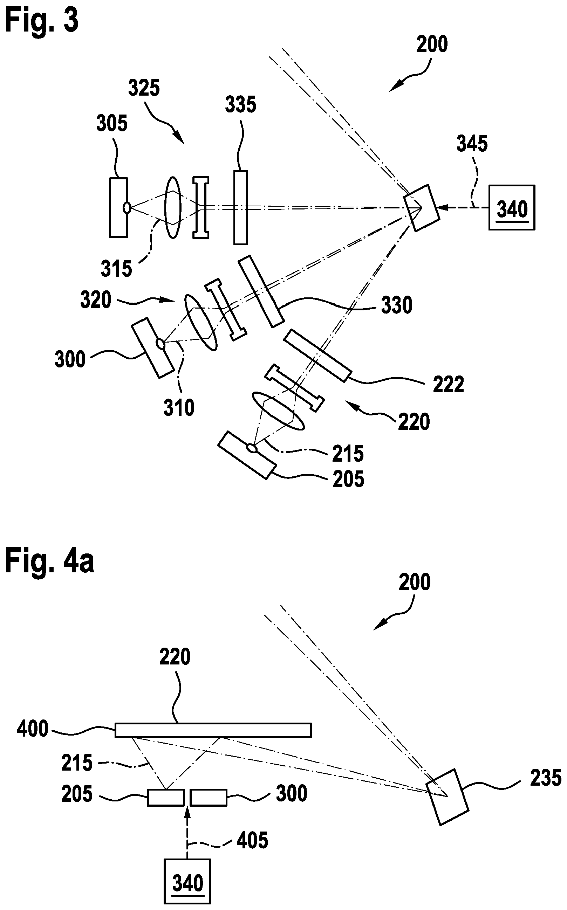

Fig. 3 zeigt eine schematische Darstellung einer Beleuchtungsvorrichtung 200 gemäß einem Ausführungsbeispiel. Die hier dargestellte Beleuchtungsvorrichtung 200 entspricht oder ähnelt der in der vorangegangenen Figur 2 beschriebenen Beleuchtungsvorrichtung, mit dem Unterschied, dass die Beleuchtungsvorrichtung 200 in diesem Ausführungsbeispiel eine Mehrzahl von Kanälen, hier neben der fluoreszierenden Lichtquelle 205 eine weitere fluoreszierende Lichtquelle 300 und eine zusätzliche fluoreszierende Lichtquelle 305 aufweist, deren Lichtstrahlen über einen Spiegel kombinierbar sind. Dabei ist die weitere fluoreszierende Lichtquelle 300 in einem Ausführungsbeispiel ausgebildet, um angeregt durch die in der vorangegangenen Figur 2 beschriebene Anregungsstrahlung oder durch eine weitere Anregungsstrahlung durch Fluoreszieren einen weiteren Fluoreszenzlichtstrahl 310 auszugeben. Gleichermaßen ist die zusätzliche fluoreszierende Lichtquelle 303 in einem Ausführungsbeispiel ausgebildet, um angeregt durch die Anregungsstrahlung oder durch eine zusätzliche Anregungsstrahlung durch Fluoreszieren einen weiteren Fluoreszenzlichtstrahl 315 auszugeben. Dabei sind lediglich beispielhaft die fluoreszierende Lichtquelle 205, die weitere fluoreszierende Lichtquelle 300 und die zusätzliche fluoreszierende Lichtquelle 305 ausgebildet, um den Fluoreszenzlichtstrahl 215, den weiteren Fluoreszenzlichtstrahl 310 und den zusätzlichen Fluoreszenzlichtstrahl 315 lediglich beispielhaft mit jeweils einem schmalen Wellenlängenband auszugeben. Folglich treffen in diesem Ausführungsbeispiel von mit verschiedenen Phosphoren ausgestatteten verschiedenen Lichtquellen 205, 300, 305 ausgegebene Strahlen aus unterschiedlichen Richtungen auf die Spiegeleinrichtung.

Gemäß einem Ausführungsbeispiel umfasst die Beleuchtungsvorrichtung neben den gezeigten drei fluoreszierenden Lichtquellen 205, 300, 305 mindestens noch eine weitere fluoreszierende Lichtquelle, also insgesamt beispielsweise vier oder fünf oder mehr als fünf fluoreszierende Lichtquellen 205, 300, 305, deren Lichtstrahlen über einen gemeinsamen Spiegel kombinierbar sind. Die unterschiedlichen Lichtquellen 205, 300, 305 werden gemäß einem Ausführungsbeispiel verwendet, um Lichtstrahlen unterschiedlicher Charakteristika, beispielsweise unterschiedlicher Wellenlängen, auszusenden.

In diesem Ausführungsbeispiel umfasst die Beleuchtungsvorrichtung 200 zudem lediglich beispielhaft eine Steuereinrichtung 340, die ausgebildet ist, um lediglich beispielhaft ein Lenksignal 345 zum Lenken des Fokussierstrahls an die Spiegeleinrichtung 230 bereitzustellen. Entsprechend ist die Beleuchtung von einer oder mehrerer Flächen, beispielsweise auf einer Lab-on-Chip-Kartusche, mit Licht ermöglicht. Anzahl, Form und Ausdehnung der Flächen sind dabei innerhalb eines gewissen Bereichs frei wählbar und flexibel elektronisch steuerbar. Das Licht selbst erfüllt die Anforderungen für die Fluoreszenz-Anregung molekulardiagnostischer Assays, beispielhaft auch mit mehreren Farbkanälen. Dies bedeutet ein in Zentralwellenlänge und Breite genau definiertes Spektrum, beziehungsweise mehrere solcher Spektren, zwischen denen ein Umschalten möglich ist.

In anderen Ausführungsbeispielen können zum Beispiel nicht alle der Lichtquellen phosphorbasiert sein und beispielsweise unterschiedliche Optiken verwenden. Dieses Konzept ist von RGB-Projektoren bekannt. Beispielsweise ist auch denkbar, dass eine oder mehrere der Quellen Laserdioden sind. Zudem können anstelle der Bandpassfilter auch andere durchstimmbare Filter eingesetzt werden.

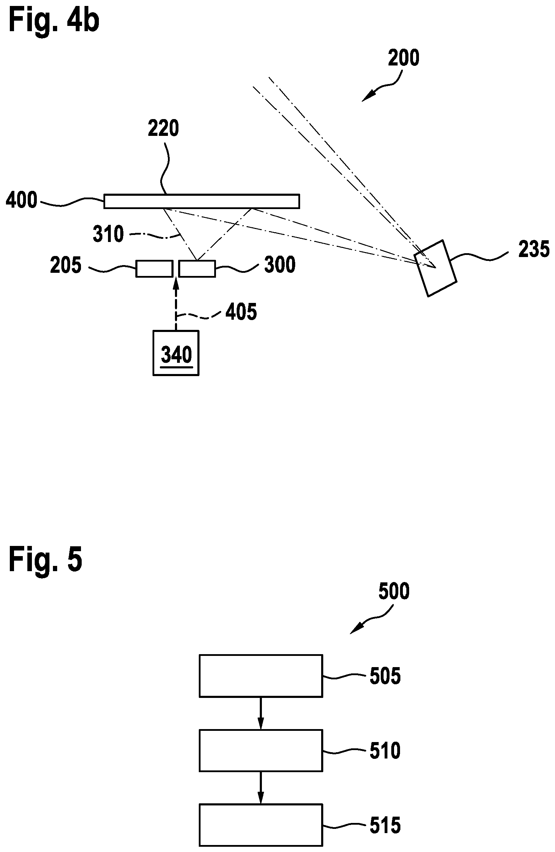

Die Figuren 4a und 4b zeigen jeweils eine schematische Darstellung einer Beleuchtungsvorrichtung 200 gemäß der Erfindung. Die hier dargestellte Beleuchtungsvorrichtung 200 entspricht oder ähnelt der in den vorangegangenen Figuren 2 und 3 beschriebenen Beleuchtungsvorrichtung, mit dem Unterschied, dass die Fokussiereinrichtung 220 in diesem Ausführungsbeispiel ein holografisch optisches Element 400 umfasst. Dadurch ist lediglich beispielhaft ein intrinsisch wellenlängenselektiv strahlführendes Element realisiert. Die Beleuchtungsvorrichtung 200 umfasst in diesem Ausführungsbeispiel die fluoreszierende Lichtquelle 205, die weitere fluoreszierende Lichtquelle 300 und eine Fokussiereinrichtung 220 mit dem holografisch optischen Element 400 (HOE), das in diesem Ausführungsbeispiel Licht, das heißt den Fluoreszenzlichtstrahl 215 oder den weiteren Fluoreszenzlichtstrahl 310, von den zwei Lichtquellen 205, 300 auf das Spiegelelement 235 bündelt. Lediglich beispielhaft umfasst das holografisch optischen Element 400 in diesem Ausführungsbeispiel mehrere übereinandergeschichtete Einzelhologramme. In diesem Ausführungsbeispiel sind die einzelnen Hologramme so eingerichtet, dass sie von jeweils einem Phosphor eine Kugelwelle mit der gewünschten Wellenlänge fokussiert auf den Spiegel umlenken. Dabei ist die Steuereinrichtung 340 in diesem Ausführungsbeispiel ausgebildet, um unter Verwendung eines Aktionssignals 405 die gewünschte Lichtquelle 205, 300 ein- und auszuschalten. Je nachdem, welcher Phosphor gerade angeregt wird und emittiert, wird dann das Spiegelelement 235 mit den gewünschten Wellenlängen angestrahlt.

Mit anderen Worten ist der Kern der hier dargestellten Beleuchtungsvorrichtung 200 die Beleuchtungsverteilung mittels eines mechanisch steuerbaren Spiegels, beispielsweise eines mikromechanischen Spiegels, zu kontrollieren. Die Beleuchtung findet beispielhaft nach dem Flying-Spot-Prinzip statt, wobei der Strahl mittels des Spiegelelements über die betreffenden Flächen scannbar oder führbar ist. Dabei werden an Stelle von einer oder mehrerer Laserdioden phosphorbasierte Lichtquellen 205, 300 verwendet. Der in diesem Zusammenhang etablierte Begriff "Phosphor" bezeichnet nicht das gleichnamige Element, sondern allgemein einen geeigneten Leuchtstoff, der durch eine primäre Lichtquelle, zum Beispiel eine Laserdiode, zur Emission von Fluoreszenzlicht angeregt wird. Mit solchen Quellen sind extrem kleine Lichtquellen realisierbar, sodass sich das so erzeugte Fluoreszenzlicht dann auch wiederum gut kollimieren oder fokussieren lässt. Erfindungsgemäß ist das Fluoreszenzlicht des Phosphors hierbei über ein holografisches optisches Element 400 (HOE) zum Spiegel lenkbar.

In einem anderen Ausführungsbeispiel kann das HOE auch als Multiplex-Hologramm ausgebildet sein und die Fokussierung auf beispielhaft einen Mikrospiegel kann zum Beispiel gemäß dem Stand der Technik mit Linsen, Hohlspiegeln oder ähnlichen optischen Elementen erfolgen. Weiterhin sind optional Anordnungen denkbar, bei denen jeder Phosphor seine eigene Primärquelle besitzt. Zudem kann die gezeigte zweikanalige Ausführungsform auch auf drei, vier oder mehr Kanäle erweitert werden. Der Vorteil dieser Anordnung besteht darin, dass ein einzelnes, potenziell preisgünstiges Element, das HOE, mehrere Funktionen vereinigt, Strahlführung und Wellenlängenfilterung, und Kanalwechsel ohne bewegliche Teile ermöglicht.

Fig. 5 zeigt ein Ablaufdiagramm eines Verfahrens 500 zum Beleuchten einer in einem Aufnahmebereich eines Analysegeräts angeordneten mikrofluidischen Einrichtung gemäß einem Ausführungsbeispiel. Dabei weist das Verfahren 500 einen Schritt 505 des Ausgebens eines Fluoreszenzlichtstrahls ansprechend auf eine Anregungsstrahlung auf. Weiterhin umfasst das Verfahren 500 einen Schritt 510 des Überführens des Fluoreszenzlichtstrahls in einen fokussierten Fokussierlichtstrahl und einen Schritt 515 des Lenkens des Fokussierlichtstrahls auf die mikrofluidische Einrichtung.

## Patentansprüche

1. Beleuchtungsvorrichtung (200) zum Beleuchten einer in einem Aufnahmebereich (110) eines Analysegeräts (100) angeordneten mikrofluidischen Einrichtung (105), wobei die Beleuchtungsvorrichtung (200) folgende Merkmale aufweist:
mindestens eine fluoreszierende Lichtquelle (205), die ausgebildet ist, um angeregt durch eine Anregungsstrahlung (210) durch Fluoreszieren einen Fluoreszenzlichtstrahl (215) auszugeben;
eine Fokussiereinrichtung (220) zum Fokussieren des Fluoreszenzlichtstrahls (215), wobei die Fokussiereinrichtung (220) ausgebildet ist, um den Fluoreszenzlichtstrahl (215) in einen Fokussierlichtstrahl (225) zu überführen, und wobei die Fokussiereinrichtung (220) mindestens ein holografisch optisches Element (400) zum Vornehmen einer Wellenlängenselektion umfasst; und
eine Spiegeleinrichtung (230) zum Lenken des Fokussierlichtstrahls (225) zu der mikrofluidischen Einrichtung (105), wobei die Spiegeleinrichtung (230) mindestens ein bewegliches Spiegelelement (235) umfasst.

2. Beleuchtungsvorrichtung (200) gemäß einem der vorangegangenen Ansprüche, wobei die Spiegeleinrichtung (230) mindestens einen mikromechanischen Spiegel aufweist.

3. Beleuchtungsvorrichtung (200) gemäß einem der vorangegangenen Ansprüche, wobei die fluoreszierende Lichtquelle (205) ausgebildet ist, um den Fluoreszenzlichtstrahl (215) schmalbandig, insbesondere mit einer spektralen Halbwertsbreite kleiner als 100 nm, bevorzugt kleiner als 50 nm, besonders bevorzugt kleiner als 30 nm, auszugeben.

4. Beleuchtungsvorrichtung (200) gemäß einem der vorangegangenen Ansprüche, wobei die fluoreszierende Lichtquelle (205) ausgebildet ist, um den Fluoreszenzlichtstrahl (215) mit zumindest einem breiten Wellenlängenband, insbesondere mit einer spektralen Halbwertsbreite größer als 100 nm, auszugeben.

5. Beleuchtungsvorrichtung (200) gemäß einem der vorangegangenen Ansprüche, wobei mindestens ein optischer Bandpassfilter (222) im Strahlengang des Fluoreszenzlichtstrahls (215) angeordnet ist.

6. Beleuchtungsvorrichtung (200) gemäß Anspruch 5, wobei der Bandpassfilter (222) durch einen eine weitere Bandpasscharakteristik aufweisenden Bandpassfilter (222) austauschbar angeordnet ist.

7. Beleuchtungsvorrichtung (200) gemäß einem der vorangegangenen Ansprüche, wobei die fluoreszierende Lichtquelle (205) durch eine eine andere Fluoreszenzcharakteristik aufweisende Lichtquelle austauschbar angeordnet ist.

8. Beleuchtungsvorrichtung (200) gemäß einem der vorangegangenen Ansprüche, mit einer weiteren fluoreszierenden Lichtquelle (300), die ausgebildet ist, um angeregt durch die Anregungsstrahlung (210) oder eine weitere Anregungsstrahlung durch Fluoreszieren einen weiteren Fluoreszenzlichtstrahl (310) auszugeben.

9. Beleuchtungsvorrichtung (200) gemäß einem der vorangegangenen Ansprüche, mit mindestens drei weiteren fluoreszierenden Lichtquellen (300, 305), die ausgebildet sind, um angeregt durch den Anregungsstrahlung (210) oder mindestens einen weiteren Anregungsstrahlung durch Fluoreszieren einen weiteren Fluoreszenzlichtstrahl (310, 315) auszugeben.

10. Beleuchtungsvorrichtung (200) gemäß einem der vorangegangenen Ansprüche, mit einer primären Lichtquelle (217), die ausgebildet ist, um die Anregungsstrahlung (210) zum Anregen der fluoreszierenden Lichtquelle (205) auszugeben.

11. Beleuchtungsvorrichtung (200) gemäß einem der vorangegangenen Ansprüche, mit einer Steuereinrichtung (340), die ausgebildet ist, um ein Lenksignal (345) zum Lenken des Fokussierstrahls (225) an die Spiegeleinrichtung (230) bereitzustellen und/oder um ein Aktionssignal (405) zum Ein- und Ausschalten einer Lichtquelle (205) bereitzustellen.

12. Analysegerät (100) zum Analysieren einer Probe in einer mikrofluidischen Einrichtung (105), wobei das Analysegerät (100) einen Aufnahmebereich (110) zum Aufnehmen der mikrofluidischen Einrichtung (105) und eine Beleuchtungsvorrichtung (200) gemäß einem der vorangegangenen Ansprüche umfasst.

13. Verfahren (500) zum Beleuchten einer in einem Aufnahmebereich (110) eines Analysegeräts (100) angeordneten mikrofluidischen Einrichtung (105), wobei das Verfahren (500) folgende Schritte aufweist:
Ausgeben (505) eines Fluoreszenzlichtstrahls (215) ansprechend auf eine Anregungsstrahlung (210);
Überführen (510) des Fluoreszenzlichtstrahls (215) in einen fokussierten Fokussierlichtstrahl (225), wobei mit einem holografisch optischen Element (400) eine Wellenlängenselektion vorgenommen wird; und
Lenken (515) des Fokussierlichtstrahls (225) auf die mikrofluidische Einrichtung (105).

## Claims

1. Illumination apparatus (200) for illuminating a microfluidic device (105) arranged in a receiving region (110) of an analyser (100), wherein the illumination apparatus (200) has the following features:
at least one fluorescent light source (205) designed to output a fluorescent light beam (215) when excited by an excitation radiation (210) by fluorescing;
a focusing device (220) for focusing the fluorescent light beam (215), wherein the focusing device (220) is designed to convert the fluorescent light beam (215) into a focusing light beam (225), and wherein the focusing device (220) comprises at least one holographic optical element (400) for making a wavelength selection; and
a mirror device (230) for directing the focusing light beam (225) to the microfluidic device (105), wherein the mirror device (230) comprises at least one movable mirror element (235).

2. Illumination apparatus (200) according to any of the preceding claims, wherein the mirror device (230) has at least one micromechanical mirror.

3. Illumination apparatus (200) according to any of the preceding claims, wherein the fluorescent light source (205) is designed to output the fluorescent light beam (215) in narrowband fashion, in particular with a spectral full width at half maximum of less than 100 nm, preferably less than 50 nm, particularly preferably less than 30 nm.

4. Illumination apparatus (200) according to any of the preceding claims, wherein the fluorescent light source (205) is designed to output the fluorescent light beam (215) with at least one wide wavelength band, in particular with a spectral full width at half maximum of greater than 100 nm.

5. Illumination apparatus (200) according to any of the preceding claims, wherein at least one optical bandpass filter (222) is arranged in the beam path of the fluorescent light beam (215).

6. Illumination apparatus (200) according to Claim 5, wherein the bandpass filter (222) is arranged interchangeably with a bandpass filter (222) having a further bandpass characteristic.

7. Illumination apparatus (200) according to any of the preceding claims, wherein the fluorescent light source (205) is arranged interchangeably with a light source having a different fluorescence characteristic.

8. Illumination apparatus (200) according to any of the preceding claims, comprising a further fluorescent light source (300) designed to output a further fluorescent light beam (310) when excited by the excitation radiation (210) or by a further excitation radiation by fluorescing.

9. Illumination apparatus (200) according to any of the preceding claims, comprising at least three further fluorescent light sources (300, 305) designed to output a further fluorescent light beam (310, 315) when excited by the excitation radiation (210) or by at least one further excitation radiation by fluorescing.

10. Illumination apparatus (200) according to any of the preceding claims, comprising a primary light source (217) designed to output the excitation radiation (210) for excitation of the fluorescent light source (205).

11. Illumination apparatus (200) according to any of the preceding claims, comprising a control device (340) designed to provide a directing signal (345) for directing the focusing beam (225) to the mirror device (230) and/or to provide an action signal (405) for switching a light source (205) on and off.

12. Analyser (100) for analysing a sample in a microfluidic device (105), wherein the analyser (100) comprises a receiving region (110) for receiving the microfluidic device (105) and an illumination apparatus (200) according to any of the preceding claims.

13. Method (500) for illuminating a microfluidic device (105) arranged in a receiving region (110) of an analyser (100), wherein the method (500) has the following steps:
outputting (505) a fluorescent light beam (215) in response to an excitation radiation (210);
converting (510) the fluorescent light beam (215) into a focused focusing light beam (225), wherein a wavelength selection is made using a holographic optical element (400); and
directing (515) the focusing light beam (225) to the microfluidic device (105).

## Revendications

1. Appareil d'éclairage (200) destiné à éclairer un dispositif microfluidique (105) disposé dans une zone de réception (110) d'un appareil d'analyse (100), l'appareil d'éclairage (200) présentant les caractéristiques suivantes :
au moins une source de lumière fluorescente (205), conçue pour émettre, par fluorescence, un faisceau de lumière fluorescente (215) lorsqu'elle est excitée par un rayonnement d'excitation (210) ;
un dispositif de focalisation (220) destiné à focaliser le faisceau de lumière fluorescente (215), le dispositif de focalisation (220) étant conçu pour convertir le faisceau de lumière fluorescente (215) en un faisceau de lumière focalisé (225), et le dispositif de focalisation (220) comprenant au moins un élément optique holographique (400) destiné à effectuer une sélection de longueur d'onde ; et
un dispositif à miroir (230) destiné à diriger le faisceau lumineux focalisé (225) vers le dispositif microfluidique (105), le dispositif à miroir (230) comprenant au moins un élément (235) formant miroir mobile.

2. Appareil d'éclairage (200) selon l'une des revendications précédentes, dans lequel le dispositif à miroir (230) présente au moins un miroir micromécanique.

3. Appareil d'éclairage (200) selon l'une des revendications précédentes, dans lequel la source de lumière fluorescente (205) est conçue pour émettre le faisceau de lumière fluorescente (215) dans une bande étroite, en particulier avec une largeur spectrale à mi-hauteur inférieure à 100 nm, de préférence inférieure à 50 nm, et de manière particulièrement préférée inférieure à 30 nm.

4. Appareil d'éclairage (200) selon l'une des revendications précédentes, dans lequel la source de lumière fluorescente (205) est conçue pour émettre le faisceau lumineux fluorescent (215) avec au moins une large bande de longueurs d'onde, en particulier avec une largeur spectrale à mi-hauteur supérieure à 100 nm.

5. Appareil d'éclairage (200) selon l'une des revendications précédentes, dans lequel au moins un filtre optique passe-bande (222) est disposé sur le trajet optique du faisceau de lumière fluorescente (215).

6. Appareil d'éclairage (200) selon la revendication 5, dans lequel le filtre passe-bande (222) est agencé de manière à pouvoir être remplacé par un filtre passe-bande (222) présentant une autre caractéristique de bande passante.

7. Appareil d'éclairage (200) selon l'une des revendications précédentes, dans lequel la source de lumière fluorescente (205) est agencée de manière à pouvoir être remplacée par une source de lumière présentant une caractéristique de fluorescence différente.

8. Appareil d'éclairage (200) selon l'une des revendications précédentes, comprenant une autre source de lumière fluorescente (300) qui est conçue pour émettre, par fluorescence, un autre faisceau lumineux fluorescent (310) lorsqu'elle est excitée par le rayonnement d'excitation (210) ou par un autre rayonnement d'excitation.

9. Appareil d'éclairage (200) selon l'une des revendications précédentes, comprenant au moins trois autres sources lumineuses fluorescentes (300, 305) qui sont conçues pour émettre, par fluorescence, un autre faisceau lumineux fluorescent (310, 315) lorsqu'elles sont excitées par le rayonnement d'excitation (210) ou par au moins un autre rayonnement d'excitation.

10. Appareil d'éclairage (200) selon l'une des revendications précédentes, comprenant une source de lumière primaire (217) conçue pour émettre le rayonnement d'excitation (210) destiné à exciter la source de lumière fluorescente (205).

11. Appareil d'éclairage (200) selon l'une des revendications précédentes, comprenant un dispositif de commande (340) conçu pour fournir un signal de direction (345) destiné à diriger le faisceau de focalisation (225) vers le dispositif à miroir (230), et/ou pour fournir un signal d'actionnement (405) destiné à allumer et éteindre une source de lumière (205).

12. Appareil d'analyse (100) destiné à analyser un échantillon dans un dispositif microfluidique (105), l'appareil d'analyse (100) comprenant une zone de réception (110) destinée à recevoir le dispositif microfluidique (105) et un appareil d'éclairage (200) selon l'une des revendications précédentes.

13. Procédé (500) destiné à éclairer un dispositif microfluidique (105) disposé dans une zone de réception (110) d'un appareil d'analyse (100), le procédé (500) comprenant les étapes suivantes :
émettre (505) un faisceau de lumière fluorescente (215) en réponse à un rayonnement d'excitation (210) ;
convertir (510) le faisceau de lumière fluorescente (215) en un faisceau de lumière focalisé (225), une sélection de longueur d'onde étant effectuée au moyen d'un élément optique holographique (400) ; et
diriger (515) le faisceau lumineux focalisé (225) vers le dispositif microfluidique (105).
